# EUROPEAN PATENT APPLICATION

(11) **EP 4 832 522 A1**
(43) Date of publication of application: **28.10.2026**
(21) Application number: 24919783.1
(22) Date of filing: 09.10.2024
(51) Int. Cl.: H04W 4/80, H04W 4/06, H04W 8/00, H04W 56/00, H04W 52/02, H04W 84/18

(54) **COMMUNICATION METHOD AND DEVICE FOR ADJUSTING PACKET SCANNING WINDOW**

(30) Priority: 25.01.2024 CN 202410107894
(71) Applicant: Huawei Technologies Co., Ltd., Shenzhen, Guangdong 518129 (CN)
(72) Inventor: LI, Jie, Shenzhen, Guangdong 518129 (CN); LI, Shijun, Shenzhen, Guangdong 518129 (CN)
(74) Representative: Huawei European IPR
(86) International application number: PCT/CN2024/123732
(87) International publication number: WO 2025/156703

(57) **Abstract**

A communication method for adjusting a packet scanning window and a device are provided. In the method, start times of scanning windows of all Bluetooth devices in a Bluetooth mesh network are adjusted to a same moment. In this way, there is an overlapping time period among scanning windows of all nodes, so that a probability that all Bluetooth devices are simultaneously scanned is increased, and duration in which each Bluetooth device broadcasts a heartbeat message each time is reduced. Therefore, power consumption of a Bluetooth device that broadcasts a packet can be reduced while a probability that a heartbeat message of each Bluetooth device is scanned is increased.

## Description

This application claims priority to Chinese Patent Application No. 202410107894.8, filed with the China National Intellectual Property Administration on January 25, 2024 and entitled "COMMUNICATION METHOD FOR ADJUSTING PACKET SCANNING WINDOW AND DEVICE", which is incorporated herein by reference in its entirety.

### TECHNICAL FIELD

This application relates to the field of wireless communication technologies, and in particular, to a communication method for adjusting a packet scanning window and a device.

### BACKGROUND

A network based on Bluetooth low energy (Bluetooth low energy, BLE) released by the Bluetooth special interest group (Bluetooth special interest group, Bluetooth SIG), for example, a Bluetooth wireless mesh (mesh) network, which is hereinafter referred to as a Bluetooth mesh network. Bluetooth mesh network technology has a wide application prospect in building automation, commercial lighting, and sensor networks.

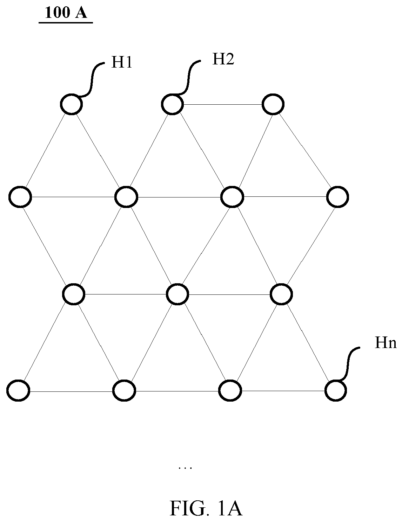

A BLE device in the Bluetooth mesh network is referred to as a node (Node), and each node can implement Bluetooth communication with another node in a form of broadcast or the like. For example, FIG. 1A is a diagram of a mesh of a Bluetooth mesh network 100A. A network of the Bluetooth mesh network 100A in FIG. 1A includes several nodes, including a node H1, a node H2, ..., and a node Hn shown in FIG. 1A. Nodes can respond to network requests and communicate with other nodes in a timely manner through Bluetooth broadcast.

On the Bluetooth mesh network, a network flooding (Flooding) manner is used to broadcast and relay packets, so that packets can reach a destination device through a plurality of paths, to ensure reliability of the Bluetooth mesh network. However, when the flooding technology is used, to increase a receiving success rate of a packet receiving device, a device that broadcasts a packet generally needs to continuously broadcast the packet in a long time. Consequently, power consumption of the device that broadcasts the packet is high.

### SUMMARY

To resolve the foregoing problem, embodiments of this application provide a communication method for adjusting a packet scanning window and a device, to increase a receiving success rate of a packet receiving device.

According to a first aspect, an embodiment of this application provides a communication method for adjusting a packet scanning window, including: A first Bluetooth device in a Bluetooth mesh network broadcasts a first scan adjustment message, where the first scan adjustment message indicates a second Bluetooth device and a third Bluetooth device in the Bluetooth mesh network to adjust a start time of a packet scanning window to a first moment, a start time of the packet scanning window of the second Bluetooth device before adjustment is a second moment, a start time of the packet scanning window of the third Bluetooth device before adjustment is a third moment, and the first moment, the second moment, and the third moment are all different time points; the first Bluetooth device adjusts the start time of the packet scanning window to the first moment; and the first Bluetooth device scans a plurality of heartbeat messages in at least one packet scanning window obtained after the start time is adjusted, where the plurality of heartbeat messages include a first heartbeat message broadcast by the second Bluetooth device and a second heartbeat message broadcast by the third Bluetooth device.

It may be understood that, in the Bluetooth mesh network, when each Bluetooth device (for example, a node below) performs packet scanning, a packet scanning window (that is, a scanning window below) makes a start time of the packet scanning window not at a same moment according to a configuration status of the Bluetooth device. For example, because the second Bluetooth device and the third Bluetooth device have different configuration statuses, the start time of the packet scanning window of each Bluetooth device may be at different moments. For example, the start time of the packet scanning window of the second Bluetooth device before adjustment is the second moment, the start time of the packet scanning window of the third Bluetooth device before adjustment is the third moment, and both the second moment and the third moment are different time points. After the first Bluetooth device broadcasts the first scan adjustment message, and the first scan adjustment message indicates the second Bluetooth device and the third Bluetooth device in the Bluetooth mesh network to adjust the start time of the packet scanning window to the first moment, all Bluetooth devices may adjust the packet scanning window to a same moment. In this case, there is an overlapping time period among packet scanning windows of the first Bluetooth device, the second Bluetooth device, and the third Bluetooth device, so that a probability that all Bluetooth devices are simultaneously scanned can be increased, and duration in which each Bluetooth device broadcasts a heartbeat message each time can be reduced, and a scanning period does not need to be increased. Therefore, power consumption of a Bluetooth device that broadcasts a packet can be reduced while a probability that a heartbeat message of each Bluetooth device is scanned is increased.

In a possible implementation of the first aspect, the method further includes: determining, based on clock drift accuracy of each Bluetooth device in the Bluetooth mesh network, that the first scan adjustment message is to be broadcast by the first Bluetooth device, where the clock drift accuracy of the first Bluetooth device meets a first accuracy condition.

It may be understood that the first accuracy condition may be that clock drift accuracy of the Bluetooth device is greater than that of a Bluetooth device that needs to perform packet scanning window adjustment except the Bluetooth device in the Bluetooth mesh network, that is, the clock drift accuracy is the highest. The first accuracy condition may also be that the clock drift accuracy is the second highest or the clock drift accuracy is the third highest, which is not required herein. It may be understood that, because each Bluetooth device may evaluate clock drift accuracy of the Bluetooth device, and determine, based on the clock drift accuracy, a device configured to broadcast the scan adjustment message, this is scientific and reasonable.

In a possible implementation of the first aspect, scanning periods of the first Bluetooth device, the second Bluetooth device, and the third Bluetooth device are the same or in a multiple relationship, and the scanning periods include the packet scanning window and a scanning sleep period.

It may be understood that when the scanning periods of the first Bluetooth device, the second Bluetooth device, and the third Bluetooth device are the same or in a multiple relationship, for example, the scanning periods may be 600 ms or 300 ms in the following, there are a large quantity of overlapping time periods among packet scanning windows of the first Bluetooth device, the second Bluetooth device, and the third Bluetooth device, and the probability that all Bluetooth devices are simultaneously scanned is higher, which helps further reduce power consumption.

In a possible implementation of the first aspect, the first Bluetooth device periodically sends a scan adjustment message at an adjustment period, where the adjustment period is greater than or equal to a maximum scanning period, and the maximum scanning period is a maximum scanning period of scanning periods of the first Bluetooth device and Bluetooth devices other than the first Bluetooth device in the Bluetooth mesh network.

It may be understood that, as Bluetooth devices continuously run, and clock drift occurs, the start times of the packet scanning windows that should be originally aligned among the Bluetooth devices are staggered. Therefore, the first Bluetooth device periodically sends the scan adjustment message at the adjustment period, so that the start times of the packet scanning windows of the Bluetooth devices are reconfigured at a same moment, so as to increase the probability that the Bluetooth devices are simultaneously scanned.

According to a second aspect, an embodiment of this application provides a communication method for adjusting a packet scanning window, including: A second Bluetooth device in a Bluetooth mesh network receives a first scan adjustment message sent by a first Bluetooth device in the Bluetooth mesh network, and adjusts a start time corresponding to the packet scanning window to a first moment, where a start time of the packet scanning window of the second Bluetooth device before adjustment is a second moment, and the first moment and the second moment are different time points; and the second Bluetooth device scans a plurality of heartbeat messages in the at least one packet scanning window obtained after the start time is adjusted, where the plurality of heartbeat messages include a third heartbeat message broadcast by the first Bluetooth device and a second heartbeat message broadcast by the third Bluetooth device.

It may be understood that the second Bluetooth device in the Bluetooth mesh network adjusts, based on the received first scan adjustment message, the start time corresponding to the packet scanning window to the first moment. In this case, the start time may effectively cooperate with a start time of a packet scanning window of another device in the Bluetooth mesh network, so that the start time of the packet scanning window of each Bluetooth device is configured at the same moment, so as to increase a probability of receiving a same heartbeat message together with the another device.

In a possible implementation of the second aspect, the third heartbeat message is a heartbeat message broadcast by the first Bluetooth device in a P1^{th} broadcast period, and the second Bluetooth device scans the third heartbeat message in an S2^{th} scanning period, where the scanning period includes the packet scanning window and a scanning sleep period.

In a possible implementation of the second aspect, the method further includes: The second Bluetooth device scans, at a fourth moment, a fourth heartbeat message that is broadcast by the first Bluetooth device in a (P1+n)^{th} broadcast period; the second Bluetooth device determines, based on a first time interval, that a packet scanning window of the second Bluetooth device in an (S2+j)^{th} scanning period meets a first window adjustment condition, where the first time interval is a time interval between a first receiving time tm at which the second Bluetooth device scans the fourth heartbeat message and an estimated second receiving time tn at which the fourth heartbeat message is received; and adjusts a start time of the packet scanning window in an (S2+j+1)^{th} scanning period.

It may be understood that, after Bluetooth devices in the Bluetooth mesh network broadcast and scan a heartbeat message for a period of time, scanning windows of the Bluetooth devices are not aligned due to clock drift. In this case, each Bluetooth device may dynamically adjust a start time of a scanning window of the Bluetooth device by using one Bluetooth device as an alignment standard, so that the scanning windows of the Bluetooth devices may still have an overlapping time period. Specifically, devices may negotiate one aligned Bluetooth device. For example, the first Bluetooth device is used as the aligned Bluetooth device, and a start time of a scanning window of another Bluetooth device is aligned with the start time of the scanning window of the Bluetooth device. It may be understood that the devices may determine, based on a first receiving time at which a heartbeat message sent by another Bluetooth device is scanned and estimated in advance, whether adjustment is required by comparing the estimated first receiving time with an actually received second receiving time. For example, after scanning the fourth heartbeat message broadcast by the first Bluetooth device in the (P1+n)^{th} broadcast period, the second Bluetooth device determines through comparison that a time interval between the first receiving time tm at which the fourth heartbeat message is scanned and the estimated second receiving time tn at which the fourth heartbeat message is received meets the first window adjustment condition. In this case, the second Bluetooth device adjusts a start time of a next packet scanning window, to avoid misalignment between the packet scanning window of the second Bluetooth device and another packet scanning window, which would otherwise reduce the probability of receiving the same heartbeat message together with the another device.

In a possible implementation of the second aspect, the method further includes: The first window adjustment condition includes that the first time interval is greater than a time threshold.

It may be understood that, if the first time interval is greater than the time threshold, it indicates that a start time point of the packet scanning window of the Bluetooth device is greatly misaligned with the start time of the packet scanning window of the aligned Bluetooth device, and in this case, adjustment is required.

In a possible implementation of the second aspect, the adjusting the start time of the packet scanning window in the (S2+j+1)^{th} scanning period includes: when the first receiving time tm is earlier than the second receiving time tn, advancing the start time of the packet scanning window in the (S2+j+1)^{th} scanning period by the first time interval; and when the first receiving time tm is later than the second receiving time tn, delaying the start time of the packet scanning window in the (S2+j+1)^{th} scanning period by the first time interval.

In a possible implementation of the second aspect, the fourth heartbeat message is a heartbeat message that is broadcast for the first time among heartbeat messages that are broadcast by the first Bluetooth device for a plurality of times in the (P1+n)^{th} broadcast period.

It may be understood that, it is convenient to perform determining by using the heartbeat message broadcast for the first time among heartbeat messages that are broadcast for a plurality of times in a broadcast period.

According to a third aspect, an embodiment of this application provides a Bluetooth device, including a sensor hub and a Bluetooth chip. The sensor hub is configured to control the Bluetooth chip to perform the communication method for adjusting a packet scanning window according to any one of the first aspect and the implementations of the first aspect, or the communication method for adjusting a packet scanning window according to any one of the second aspect and the implementations of the second aspect.

It may be understood that, because the sensor hub is a hardware module that has low power consumption and can always work, each Bluetooth device may always control, by using the sensor hub, the Bluetooth chip to periodically broadcast a heartbeat message and adjust scanning window alignment. In this case, the processor does not need to be woken up to control the Bluetooth chip to broadcast the heartbeat message, and the processor may go to sleep, so as to further reduce power consumption. Because power consumption of the sensor hub is low, in this case, overheads for controlling the Bluetooth chip to periodically broadcast a packet are low, and a broadcast period and duration of broadcasting a heartbeat message in each broadcast period may be further reduced, so as to further improve broadcast efficiency on the basis of reducing the power consumption.

According to a fourth aspect, an embodiment of this application provides a Bluetooth device, including a processor and a memory, where the memory is configured to store program instructions, and the processor is configured to read the program instructions, so that the Bluetooth device is enabled to perform the communication method for adjusting a packet scanning window according to any one of the first aspect and the implementations of the first aspect, or the communication method for adjusting a packet scanning window according to any one of the second aspect and the implementations of the second aspect.

According to a fifth aspect, an embodiment of this application provides a computer program product. The computer program product includes instructions. When the instructions are executed, a computer is enabled to perform the communication method for adjusting a packet scanning window according to any one of the first aspect and the implementations of the first aspect, or the communication method for adjusting a packet scanning window according to any one of the second aspect and the implementations of the second aspect.

According to a sixth aspect, an embodiment of this application provides a readable storage medium, where the readable medium stores instructions, and when the instructions are executed on an electronic device, the electronic device is enabled to perform the communication method for adjusting a packet scanning window according to any one of the first aspect and the implementations of the first aspect, or the communication method for adjusting a packet scanning window according to any one of the second aspect and the implementations of the second aspect.

For beneficial effects of the fourth aspect to the sixth aspect, refer to beneficial effects related to the first aspect and the second aspect. Details are not described herein again.

### BRIEF DESCRIPTION OF DRAWINGS

FIG. 1A is a diagram of a Bluetooth mesh network 100A according to some embodiments of this application;
FIG. 1B is a diagram of a smart home 100B according to some embodiments of this application;
FIG. 1C is a diagram of scanning windows of a mobile phone 101, a printer 103, and a Bluetooth headset 104 according to some embodiments of this application;
FIG. 1D is a diagram of a broadcast window according to some embodiments of this application;
FIG. 1E is a diagram of a control interface P1 of a mobile phone 101 according to some embodiments of this application;
FIG. 2A is a diagram of a mobile phone 101, a smart light 102, and a printer 103 according to some embodiments of this application;
FIG. 2B is a diagram of packet broadcast according to some embodiments of this application;
FIG. 2C is a diagram of a control center interface P2 according to some embodiments of this application;
FIG. 2D is a diagram of a hyper terminal interface P3 according to some embodiments of this application;
FIG. 2E is a diagram of timing axes of clock drift generated after a period of time corresponding to a mobile phone 101, a smart light 102, and a printer 103 according to some embodiments of this application;
FIG. 2F is another diagram of scanning windows of a mobile phone 101, a smart light 102, and a printer 103 according to some embodiments of this application;
FIG. 3A is a diagram of a process of a communication method for adjusting a packet scanning window according to some embodiments of this application;
FIG. 3B is a diagram of scanning windows of a mobile phone 101, a smart light 102, and a printer 103 according to some embodiments of this application;
FIG. 3C is a diagram of a process of dynamic adjustment of a scanning window according to some embodiments of this application;
FIG. 4A is a diagram of an interaction based on a communication method for adjusting a packet scanning window according to some embodiments of this application;
FIG. 4B is a diagram of an interaction based on another communication method for adjusting a packet scanning window according to some embodiments of this application;
FIG. 5A is a diagram of aligning wake windows of a mobile phone 101 and a smart light 102 according to some embodiments of this application;
FIG. 5B is a diagram of an operation of controlling a Bluetooth chip based on a CPU in an initial one scanning period according to some embodiments of this application;
FIG. 6 is a diagram of an operation of controlling a Bluetooth chip based on a sensor hub in an initial one scanning period according to some embodiments of this application;
FIG. 7 is a diagram of a structure of an electronic device 700 according to some embodiments of this application; and
FIG. 8 is a diagram of a structure of an electronic device 800 according to some embodiments of this application.

### DESCRIPTION OF EMBODIMENTS

The illustrative embodiments of this application include but are not limited to a communication method for adjusting a packet scanning window and a device.

The following describes embodiments of this application with reference to the accompanying drawings.

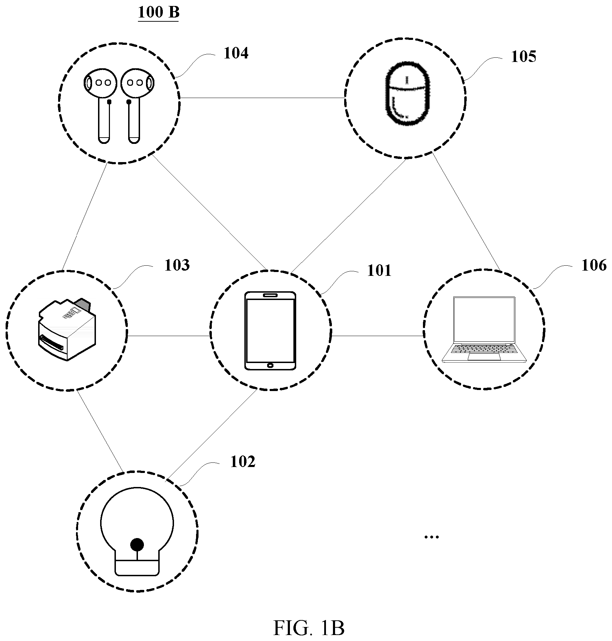

FIG. 1B is a diagram of a smart home scenario based on a Bluetooth mesh network according to some embodiments of this application.

As shown in FIG. 1B, in a smart home scenario 100B, a mobile phone 101, a smart light 102, a printer 103, a Bluetooth headset 104, a Bluetooth mouse 105, and a computer 106 may be used as nodes in a Bluetooth mesh network, and a persistent connection is established by using a Bluetooth low energy technology, to implement communication and control among the devices. It may be understood that each node in the Bluetooth mesh network may broadcast a packet to another node or receive a packet from another node.

It may be understood that, in the scenario shown in FIG. 1B, after establishing a connection, a device in the smart home 100B needs to perform a keepalive behavior. Specifically, each node needs to periodically broadcast a heartbeat message to another device. For example, the heartbeat message may be broadcast in a broadcast packet manner, where the heartbeat message is used to determine whether the device is online. Another device can determine that a broadcaster of the heartbeat message is still online and can work properly only after receiving a packet carrying the heartbeat message. Otherwise, the broadcaster of the heartbeat message is considered faulty. Generally, a device can broadcast a heartbeat message at a fixed time interval, for example, broadcast a heartbeat message once every three seconds or three minutes.

For example, if the smart light 102 in FIG. 1B broadcasts a heartbeat message to the mobile phone 101 at a specific period, for example, 3 minutes, to indicate that the smart light 102 is in an online state. Therefore, the mobile phone can normally broadcast an instruction to the smart light 102, to control the smart light 102. However, if the mobile phone 101 does not receive the heartbeat message broadcast by the smart light 102 for a long time, for example, does not receive the heartbeat message for one hour, the mobile phone 101 may consider that the smart light 102 is offline or is faulty.

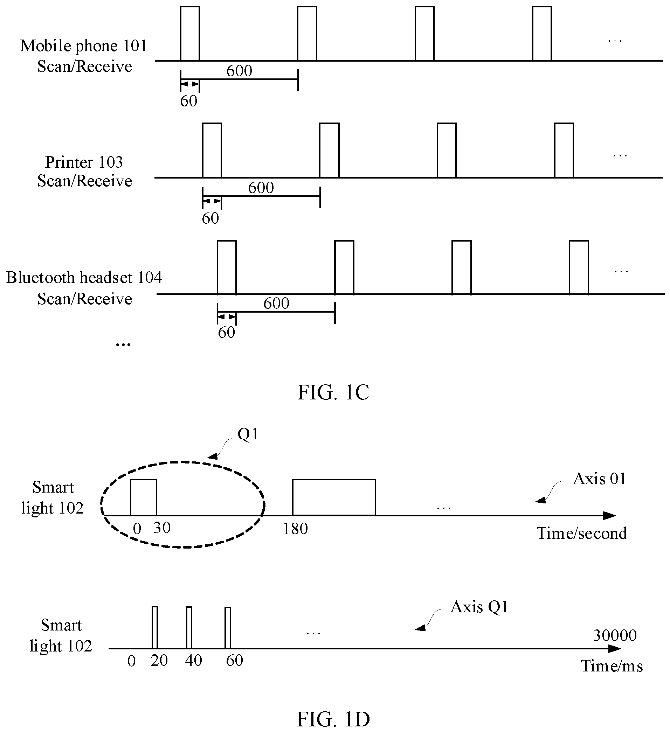

It may be understood that, in some embodiments, a Bluetooth chip of each node in the Bluetooth mesh network is configured to perform packet scanning at a specific time interval (referred to as a scanning sleep period below). For example, as shown in FIG. 1C, a Bluetooth chip in the mobile phone 101, the printer 103, and the Bluetooth headset 104 is configured as follows: A scanning window (that is, a packet scanning window) is 60 milliseconds (ms), a scanning sleep period is 540 milliseconds, a scanning period includes the scanning window and the scanning sleep period, and a length is 600 ms. That is, each device starts packet scanning every 540 ms, and each packet scanning lasts 60 ms. In addition, each device can scan a heartbeat message only in a time period corresponding to the scanning window, that is, receive the heartbeat message.

As described above, each node in the Bluetooth mesh network also broadcasts a heartbeat message at a fixed time interval. Therefore, if a time at which a node broadcasts a heartbeat message to another node is exactly a scanning sleep period of the another node, the another node cannot scan the heartbeat message. In some embodiments, to increase a success rate of receiving a packet, each node may use a flooding technology to broadcast a heartbeat message and stop broadcasting the packet after a long broadcast time.

Refer to an axis 01 in FIG. 1D, when the smart light 102 uses a flooding manner, the smart light 102 may broadcast a heartbeat message to all other devices every three minutes. In this case, to increase a success rate of receiving the heartbeat message in the broadcast period, the smart light 102 may continuously broadcast the heartbeat message for 30s in each broadcast period, resulting in high power consumption.

It may be understood that, for broadcast details of the heartbeat message corresponding to circle Q1 in the axis 01 in FIG. 1D, reference may be made to an axis Q1 in FIG. 1D. Within 30 seconds (that is, 3000 milliseconds), the smart light 102 broadcasts one heartbeat message every 20 milliseconds, and continuously broadcasts the heartbeat message for 30s, resulting in high power consumption. However, because duration of broadcasting the heartbeat message is long, high power consumption is caused.

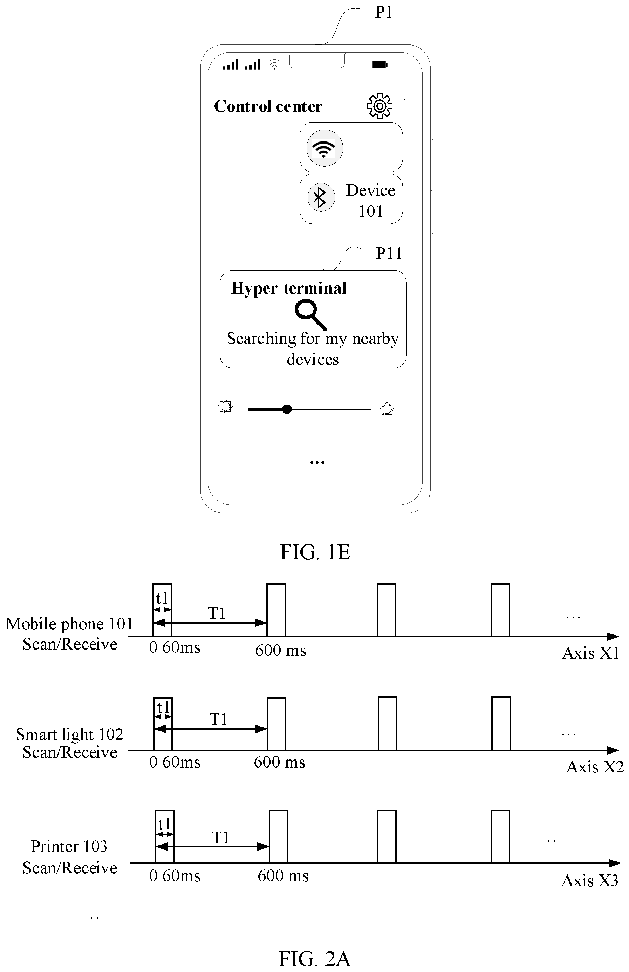

Further, when the broadcast power consumption is high, some problems may also be caused. For example, because each broadcast of each node lasts for a long time, and power consumption is high, to maintain power consumption and save battery power, a scanning sleep period is prolonged. For example, a heartbeat message is broadcast every 5 minutes, and the broadcast lasts for 30s. However, prolonging the scanning sleep period causes a lower probability that the node receives a heartbeat message from another node, and a time interval at which the node that broadcasts the heartbeat message is sensed to be online is also prolonged. For example, for the scenario shown in FIG. 1B, it is assumed that the smart light 102 broadcasts a heartbeat message in a time period from t1 to (t1+0.5) min, and after an interval of 5 min, restarts to broadcast the heartbeat message again after (t1+5.5) min. However, in the interval of 5 min, if a user needs to search for a connected device through the mobile phone 101, the mobile phone 101 cannot quickly sense whether the smart light 102 exists. For example, refer to a control interface P1 of the mobile phone 101 shown in FIG. 1E. In a hyper terminal block P11, surrounding devices cannot be quickly displayed, and it generally needs takes several minutes to determine which other devices exist.

Therefore, to reduce power consumption of a device that broadcasts a heartbeat message, this application provides a communication method for adjusting a packet scanning window. In the method, a start time of a scanning window of each node in the Bluetooth mesh network is adjusted to a same moment. For example, a master device in the Bluetooth mesh network broadcasts a negotiation packet to another device in the Bluetooth mesh network, where the negotiation packet carries a scan adjustment message, to notify the another device to enter the scanning window at the same moment. In this way, there is an overlapping time period (hereinafter referred to as an "overlapping time period") in the scanning windows of the nodes, so that a probability that the nodes are simultaneously scanned is increased, and duration in which the nodes broadcast a heartbeat message each time is reduced, and a scanning sleep period does not need to be increased. Therefore, in this application, a probability that a heartbeat message of each node is scanned is increased, and power consumption of a device that broadcasts a packet can be reduced.

It may be understood that, in some embodiments, a plurality of electronic devices may log in to a same user account, or a plurality of electronic devices may log in to different user accounts, but a credit granting relationship may exist between the user accounts. Each device may detect, based on the account relationship, a device that needs to synchronize a scanning window, and then automatically run a manner of a synchronized scanning window.

In some other embodiments, a plurality of electronic devices may belong to a same home network or a same public network. Each device may detect, based on a network relationship, a device that needs to synchronize a scanning window, and then automatically run a manner of a synchronized scanning window.

Specifically, the plurality of electronic devices may obtain clock drift quantities of the plurality of electronic devices in advance, so as to obtain clock drift accuracy of the plurality of electronic devices. The clock drift quantity is a variation quantity between a clock of each device and a standard clock of a cloud at different time points in a period of time, and the clock drift accuracy is a unit time variation quantity between the clock of each device and the standard clock of the cloud. A device that meets a first accuracy condition is used as a master device. For example, a device with highest clock drift accuracy is used as the master device. It may be understood that, a device with the second highest clock drift accuracy or a device with the third highest clock drift accuracy may also be used as the master device, which is not limited herein. The master device may broadcast the scan adjustment message to another device, to notify each node to configure the start time of the scanning window at one unified time point.

For example, in the scenario shown in FIG. 1B, electronic devices in the Bluetooth mesh network may have a same user account, and scanning periods and scanning windows of the electronic devices are the same. After the mobile phone 101 and the smart light 102 are both online, the mobile phone 101 and the smart light 102 each detect that the other is a device with a same user account. In this case, the mobile phone 101 and the smart light 102 automatically run a synchronized scanning window. After a period of time, when the printer 103 is online, the printer 103, the mobile phone 101, and the smart light 102 each can detect that the three devices share a same user account. In this case, the printer 103 configures a start time of a scanning window of the printer 103 to a same moment as start times of scanning windows of the mobile phone 101 and the smart light 102.

For another example, in the scenario shown in FIG. 1B, electronic devices in the Bluetooth mesh network have different user accounts but have a credit granting relationship, and scanning periods and scanning windows of the electronic devices are the same. After the mobile phone 101 and the smart light 102 are both online, the smart light 102 and the mobile phone 101 separately detect that the other is a device with a user account having a credit granting relationship. In this case, the mobile phone 101 and the smart light 102 automatically run a synchronized scanning window. After a period of time, when the printer 103 is online, the printer 103, the mobile phone 101, and the smart light 102 each can detect that the three devices have user accounts with a credit granting relationship. In this case, the printer 103 configures a start time of a scanning window of the printer 103 to a same moment as start times of scanning windows of the mobile phone 101 and the smart light 102.

It may be understood that, in some scenarios, after Bluetooth is enabled, an electronic device 0 may be connected to a surrounding device with a same user account or different user accounts that can have a credit granting relationship; or may be connected to a surrounding device with a same user account or different user accounts that can have a credit granting relationship again after a screen is turned off for a long time and then turned on again. Alternatively, Bluetooth may be automatically started at a scheduled time, for example, in the morning or at night, to connect to a surrounding device with a same user account or different user accounts that can have a credit granting relationship. For example, after Bluetooth is enabled, the electronic device 0 scans surrounding devices, checks existing devices, and then broadcasts a packet to the existing devices. The packet carries a user account of the device. A surrounding device finds that the user account is the same as a user account of the surrounding device, and may feed back the user account of the surrounding device to the electronic device 0, so as to establish a connection.

FIG. 2A shows timing axes respectively corresponding to a mobile phone 101, a smart light 102, and a printer 103 according to some embodiments of this application.

As shown in FIG. 2A, an example in which a scanning interval T1 is 600 ms, a scanning window t1 is 60 ms, and a scanning sleep period is 540 ms is used. Based on a communication solution provided in this application, a start time of a scanning window of each device is configured after a same moment. For example, a start time of a scanning window in a scanning period is 0 ms, scanning windows of all devices are 0 ms to 60 ms, 600 ms to 660 ms, 1200 ms to 1260 ms, and so on. The scanning windows of the devices overlap, and an overlapping time period corresponds to the scanning windows of the devices. In addition, after all electronic devices such as the mobile phone 101, the smart light 102, and the printer 103 separately broadcast one heartbeat message to another electronic device, if the moment is an overlapping time period, each device may scan the heartbeat message and successfully receive the heartbeat message, that is, a success rate of receiving a single heartbeat message by all devices is increased.

It may be understood that, because the success rate of receiving the single heartbeat message by all devices is increased, each device may shorten duration of continuously broadcasting a heartbeat message in each broadcast period, that is, shorten a time of a broadcast window in the broadcast period, for example, reduce the broadcast window from 30s to 10s, to reduce power consumption and improve efficiency. In addition, because power consumption of a broadcast heartbeat message required in a single broadcast period is reduced, duration of the broadcast period may be shortened, and a quantity of broadcast periods may be increased. For example, in the original 15 minutes, broadcast is performed every 5 minutes for 30s, and may be performed every 3 minutes for 10s, and a quantity of broadcast periods is changed from 3 to 5. In this case, power consumption is almost the same as that in the original case, a frequency of proving existence of the device to another device is increased, so that each device can quickly sense whether a surrounding device exists. In this way, reliability of an entire Bluetooth mesh network is improved. In this embodiment of this application, a total quantity of broadcast packets may be further reduced in a broadcast time period, to reduce power consumption.

In some embodiments, when nodes broadcast the heartbeat message, a same broadcast period may be configured for the nodes, and a start time of each broadcast window needs to be configured with a discrete time, so as to be staggered in an extremely short time, to avoid an air interface conflict. The discrete time is a time difference between a start time of a broadcast window of a node and a start time of a broadcast window of a previous node in a broadcast sequence. For example, the discrete time corresponding to each node is 5 ms, indicating that an interval between start times of two initial broadcast windows (that is, a first broadcast window) of every two nodes that are adjacent in the broadcast sequence is 5 ms.

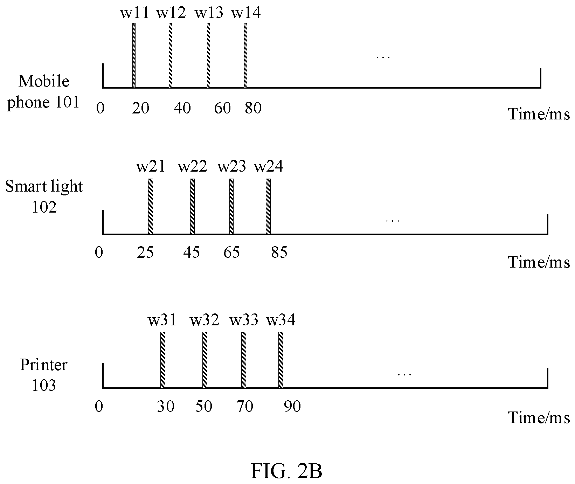

For example, 0 ms is used as a time origin, a broadcast window of each node is 2s, and a broadcast period is 50 s. In this case, a broadcast sleep period is 48s, a start time of the broadcast window of each node is staggered by a same discrete time 5 ms, and each node broadcasts a heartbeat message at a broadcast interval of 20 ms within 2s, so that broadcast heartbeat messages are staggered as much as possible, to reduce an air interface conflict. Refer to time axes shown in FIG. 2B, 0 is used as a time origin. The mobile phone 101 broadcasts packets w11, w12, w13, w14, ..., at 20 ms, 40 ms, 60 ms, 80 ms, and so on. The smart light 102 broadcasts packets w21, w22, w23, w24, ..., at 25 ms, 45 ms, 65 ms, 85 ms, and so on. The printer 103 broadcasts packets w31, w32, w33, w34, ..., at 30 ms, 50 ms, 70 ms, 90 ms, and so on. Each lasts for 2s, and other electronic devices are not shown.

In some embodiments, when each node broadcasts a packet, the node needs to control, by using a processor (central processing unit, CPU), a Bluetooth chip to broadcast the packet. After the node goes to sleep, the CPU needs to be periodically woken up to broadcast heartbeat messages, so that the time for the CPU to be woken up and run is reduced, and power consumption of the CPU is reduced.

In some other embodiments, some nodes include a sensor hub (sensor hub). Because the sensor hub is a hardware module that has low power consumption and can always work, each node may always control, by using the sensor hub, the Bluetooth chip to periodically broadcast a heartbeat message and dynamically adjust scanning window alignment, that is, the CPU does not need to be woken up to control the Bluetooth chip to broadcast the packet, and the CPU may go to sleep, so as to further reduce the power consumption. Because power consumption of the sensor hub is low, overheads for controlling the Bluetooth chip to periodically broadcast a packet are low, and a broadcast period and duration of broadcasting a packet in each broadcast period may be further reduced. For example, refer to FIG. 2A, when it is determined that an overlap period is 600 ms and overlap duration is 60 ms, the overlap period is a time difference between start points of two adjacent overlapping time periods. The broadcast period may be determined as 1 s, and the duration of broadcasting the packet may be determined as 100 ms, so that broadcast efficiency is further improved on the basis of saving power consumption.

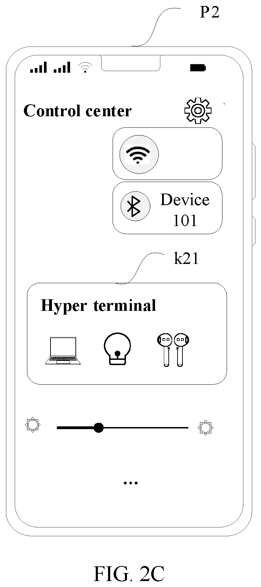

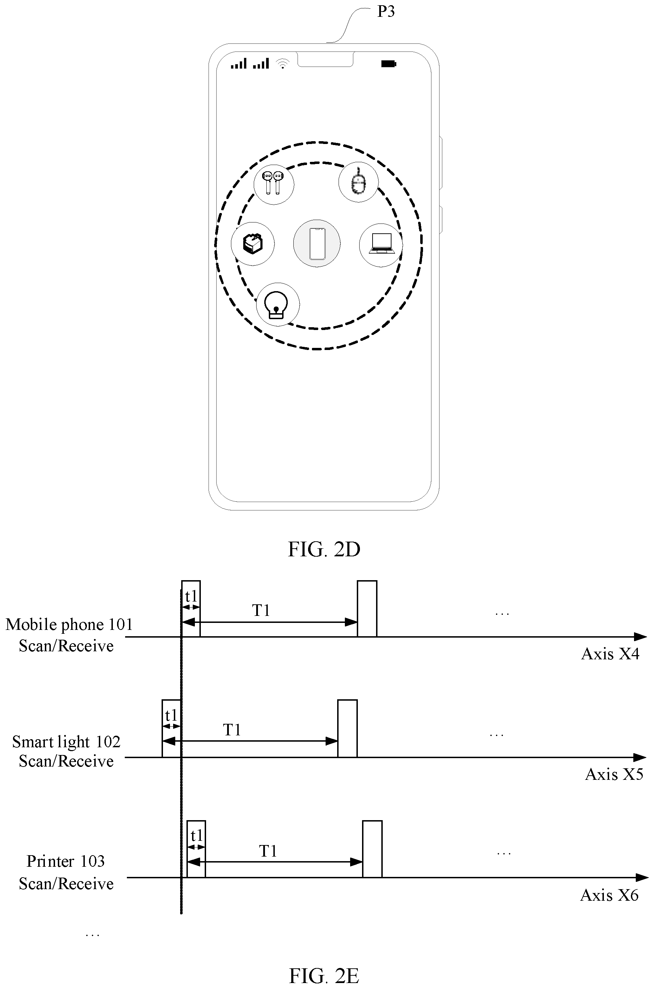

It may be understood that, in an actual use process, because a node that receives a packet can quickly receive the packet, some interfaces that enable the user to quickly sense a state of a controlled device may be provided for the user, so as to improve user experience. For example, based on the scenario shown in FIG. 1B, after using the communication method for adjusting a packet scanning window in this embodiment of this application, the mobile phone 101 can quickly sense whether a surrounding electronic device is still connected. Refer to a control center interface P2 of the mobile phone 101 shown in FIG. 2C, when the user opens the control center interface P2 of the mobile phone 101, because a packet broadcast success rate is increased for surrounding devices of the mobile phone 101, and a broadcast period is shortened, the mobile phone 101 can quickly receive a heartbeat message from the surrounding devices, and then can quickly display a device having a long connection in a hyper terminal search box k21, and may further render a hyper terminal interface P3 shown in FIG. 2D.

It may be understood that when continuously broadcasting the heartbeat message in a determined broadcast time, each node may broadcast a plurality of heartbeat messages at each time point, to increase a success rate of receiving the heartbeat message by each node. For example, within 10s, broadcasting one heartbeat message at 20 milliseconds (ms) is changed to broadcasting three heartbeat messages simultaneously, so as to increase a success rate of receiving the heartbeat message by each device that receives the heartbeat message.

It may be understood that, after nodes in the Bluetooth mesh network broadcast and scan the heartbeat message for a period of time, scanning windows of the nodes are not aligned due to clock drift. In this case, each node may dynamically adjust a start time of a scanning window of the node and a start time of a broadcast window of the node, so that the scanning windows of the nodes may still have an overlapping time period. Specifically, a clock of a node that is the first in a sending sequence may be used as a standard, that is, the node is used as a standard node, and a start time of a scanning window of another node is aligned with a start time of a scanning window of the standard node.

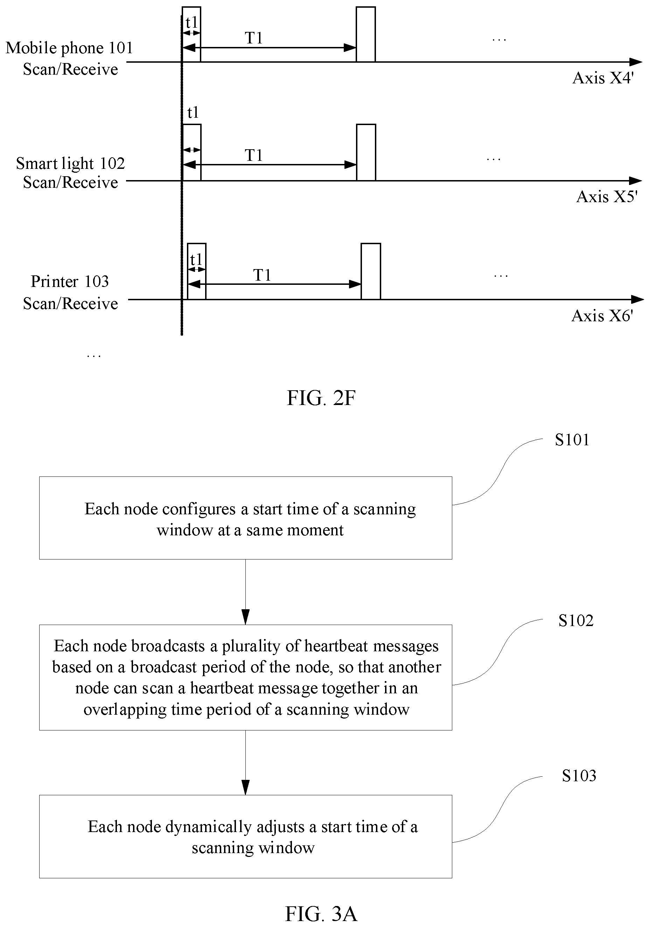

For example, FIG. 2E shows timing axes of clock drift generated after a period of time corresponding to a mobile phone 101, a smart light 102, and a printer 103. The mobile phone 101, the smart light 102, and the printer 103 correspond to a scanning window t1 of a same size and a scanning period T1. It can be learned from the figure that start times of scanning windows of the three devices are not aligned, and the start time of the scanning window of the smart light 102 is greatly staggered. The mobile phone 101 is used as a standard node, and the smart light 102 and the printer 103 may be aligned with a scanning window of the mobile phone 101, and adjust start times of the smart light 102 and the printer 103 to be delayed by t1 on the original start times. For example, as shown in FIG. 2F, a start time of a next scanning window of the smart light 102 is at a same moment as a start time of the mobile phone 101.

It may be understood that, in addition to the mobile phone, the smart light, the printer, the Bluetooth headset, the Bluetooth mouse, and the computer mentioned above, the electronic devices in the Bluetooth mesh network may further include but are not limited to an in-vehicle device, an augmented reality (augmented reality, AR)/virtual reality (virtual reality, VR) device, an ultra-mobile personal computer (ultra-mobile personal computer, UMPC), a personal digital assistant (personal digital assistant, PDA), a smart speaker, an air detector, a thermohygrometer, an alarm, a smart lock, a camera, and other electronic devices that support Bluetooth low energy transmission capability. This is not limited herein.

FIG. 3A is a diagram of a process of a communication method for adjusting a packet scanning window according to some embodiments of this application. When each node in the diagram of the process performs a specific step, an execution body may be an electronic device, or may be a processor or a sensor hub of the electronic device. However, an execution body of the method procedure is not limited in this application.

S101: Each node configures a start time of a scanning window at a same moment.

In some embodiments, each node evaluate clock drift accuracy of the node, and negotiate a master node (that is, the master device mentioned above) and a standard node based on the clock drift accuracy. Each node configures the start time of the scanning window at the same moment based on a scan adjustment message broadcast by the master node. It may be understood that the master node and the standard node may be a same node, or may be different nodes. In addition, the master node may be a node that is the first in a broadcast sequence.

In some implementations, after each node runs for a period of time due to a feature of the node, a clock drift situation exists. In this case, each node may perform clock synchronization with a standard clock in a cloud by using a clock synchronization protocol, and collect a clock drift amount, to obtain clock drift accuracy of the node. For example, in a process in which a mobile phone 101 runs for one hour, a clock of the mobile phone 101 is always less than a standard clock due to a feature of the mobile phone 101, and a clock drift amount at each time point in the process of one hour may be collected, so that clock drift accuracy of the mobile phone 101 may be evaluated. Each node negotiates a broadcast sequence of the node based on a value sequence of clock drift accuracy, and uses a node with highest clock drift accuracy as a standard node and a master node, that is, the master node and the standard node are the same node. Each node configures the start time of the scanning window at the same moment based on the scan adjustment message broadcast by the master node. Specifically, in a negotiation process, each node may carry a clock drift accuracy message of the node in a broadcast packet, and negotiate to use the node with highest clock drift accuracy as a node that is the first in a sequence and a standard node, that is, the master device mentioned above, to facilitate subsequent dynamic adjustment on each node. It may be understood that, in some other implementations, a node with second highest clock drift accuracy or third highest clock drift accuracy may also be used as a standard node. This is not limited herein.

In some implementations, each node may configure, at a same moment in the following manner, a start time of a scanning window used to receive a heartbeat message: The master node broadcasts a scan adjustment message, where the scan adjustment message includes an alignment time point. For example, the alignment time point is 10:00:00.000, and each node may configure a start time of a scanning window for receiving a packet at the alignment time point.

In some implementations, due to a clock feature, system time corresponding to a same standard clock time of each node may be inconsistent. In this case, each device may configure, according to a clock deviation rule between a system clock of the device and a system clock of the master node and a received alignment time point, the system time of the device at a time position corresponding to the alignment time point. Therefore, each node configures the start time of the scanning window at the same moment. In this case, during subsequent running, scanning windows of all nodes have an overlapping time period.

For example, it is assumed that clock drift accuracy of each device is in a sequence of, clock drift accuracy of the mobile phone 101 is first, clock drift accuracy of a smart light 102 is first, and a sequence of clock drift accuracy of the printer 103 is first..., and the mobile phone 101 with the highest clock drift accuracy is used as the master node and the standard node. In this case, the mobile phone 101 serving as the master device may interact with another device through a negotiation packet. The negotiation packet broadcast by the mobile phone 101 carries a timestamp of the broadcast packet, and after a plurality of rounds, each device may determine a fixed clock deviation rule between a system clock of the device and a system time of the mobile phone 101. For example, each time the smart light 102 receives a packet of the mobile phone 101, a system time of the smart light 102 is 1 ms different from the timestamp carried in the negotiation packet. In this case, each node may calculate a system time corresponding to 10:00:00.000 of the mobile phone 101, and assume that the system time is 10:00:00.001. Then, a system time corresponding to the start time of the scanning window is configured at 10:00:00.001, so that each node configures a start time of one scanning window used to receive the heartbeat message at a same moment.

It may be understood that each electronic device has a corresponding duty cycle in a current scenario, that is, a currently determined scanning period and scanning window. The duty cycle is a ratio of total duration of the scanning window in a time period. For example, one hour is used as an example, a duty cycle of a node is 10%, which means that packet scanning is performed for six minutes in one hour, and total duration of a scanning window is six minutes. It is assumed that a scanning interval is 600 ms, and in this case, the scanning window is 60 ms, and a quantity of scanning intervals is 600. It is also assumed that a scanning interval is 300 ms, and in this case, the scanning window is 30 ms, and a quantity of scanning intervals is 1200. In this case, after a start time of one scanning window for receiving the heartbeat message is configured at a same moment, scanning windows of all nodes have an overlapping time period. Refer to the foregoing description that the scanning interval is 600 ms and the scanning window is 60 ms shown in FIG. 2A. Details are not described herein.

In some embodiments, a duty cycle of each electronic device, a corresponding scanning window, and a corresponding scanning period may be manually set parameter values. For example, the duty cycle may also be 20%, 12%, 5%, or the like, and may be any value. In addition, the scanning window and the scanning period may also be correspondingly set to any value, as long as a duty cycle result is met, which is not required herein.

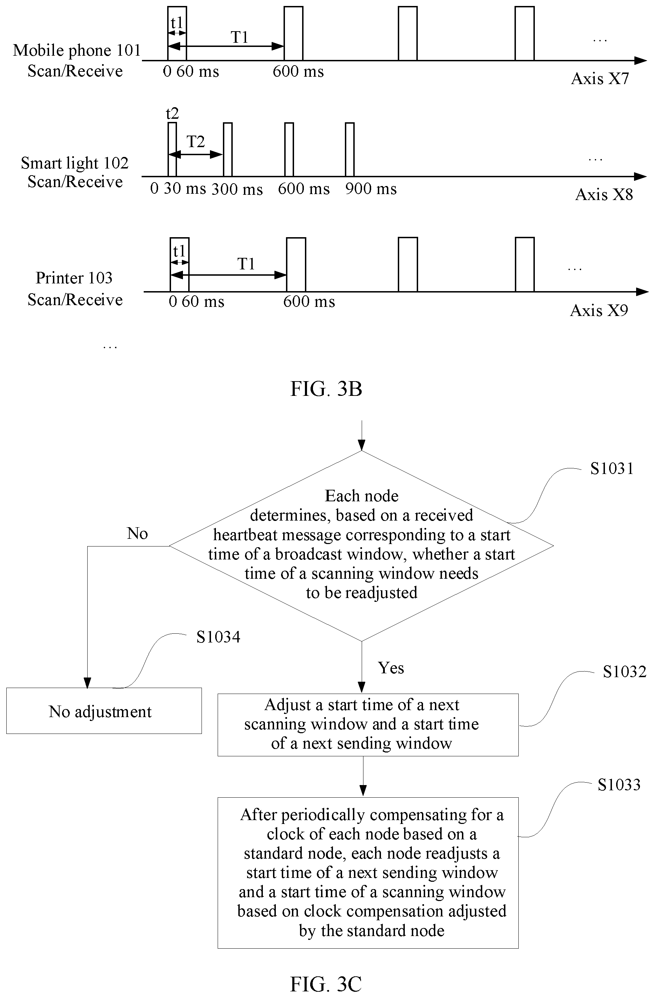

For another example, as shown in FIG. 3B, a scanning interval T1 of the mobile phone 101 and the printer 103 is 600 ms, a scanning window t1 is 60 ms, a scanning interval T2 of the smart light 102 is 300 ms, and a scanning window t2 is 30 ms. Based on the communication solution provided in this application, a start time of a scanning window of each device is configured after a same moment. For example, a start time of a scanning window in a scanning period is 0 ms, scanning windows of all devices are 0 ms to 30 ms, 600 ms to 630 ms, 1200 ms to 1230 ms, and so on.

S102: Each node broadcasts a plurality of heartbeat messages based on a broadcast period of the node, and another node can scan a heartbeat message together in an overlapping time period of a scanning window.

In some embodiments, each node determines a start time of an initial broadcast window of the node according to a broadcast sequence, and broadcasts a plurality of heartbeat messages to another node based on a negotiated broadcast period and based on the determined start time of the initial broadcast window of the node. It may be understood that because the scanning windows of the nodes are configured at the same moment, the scanning windows of the nodes have an overlapping time period. If the nodes send a heartbeat message in the overlapping time period, other nodes may scan the heartbeat message together.

In some implementations, each node determines the start time of the initial broadcast window of the node according to the determined broadcast sequence and a configured discrete time. The discrete time may be a default parameter pre-configured by a user. Then, each node broadcasts a heartbeat message to another node at the start time of the initial broadcast window based on a same broadcast period, and sizes of broadcast windows of the nodes in each broadcast period are equal. For a specific example, refer to the description shown in FIG. 2B. Details are not described herein. It may be understood that, when broadcast periods of the nodes are the same, a case in which a node A can determine that a node B exists but the node B cannot determine that the node A exists in the broadcast period can be avoided.

For example, it is assumed that a sequence of the mobile phone 101 is 1, a sequence of the smart light 102 is 2, a sequence of the printer 103 is 3, ..., and the discrete time is 5 ms. In this case, a sequence of start times of initial broadcast windows corresponding to the heartbeat messages broadcast by the nodes is the same as the broadcast sequence. The nodes may sequentially broadcast heartbeat messages based on the heartbeat message broadcast by the node with sequence 1. The start times of the broadcast windows are staggered by 5 ms. In this case, a start time of an initial broadcast window of the mobile phone 101 is 10:00:00.020, and a start time of an initial broadcast window of the smart light 102 is 10:00:00.025. Start times of initial broadcast windows of other electronic devices are not described herein.

In addition, in some other embodiments, broadcast windows of the nodes, that is, duration of the broadcast packets, may be different, and in an actual broadcast process, may be adaptively adjusted in a broadcast process. For example, when a heartbeat message broadcast by another node is received and carries information that is successfully received, a quantity of broadcast packets may also be reduced.

S103: Each node dynamically adjusts a start time of a scanning window.

In some embodiments, after the nodes broadcast and scan the heartbeat message for a period of time, scanning windows of the nodes are not aligned due to clock drift. In this case, each node may dynamically adjust the start time of the scanning window of the node and a start time of a broadcast window of the node, so that the scanning windows of the nodes may still have an overlapping time period. For a specific adjustment manner, reference may be made to a diagram of a dynamic adjustment procedure shown in FIG. 3C.

A diagram of a dynamic adjustment procedure of each node shown in FIG. 3C is as follows:

S1031: Each node determines, based on a received heartbeat message corresponding to a start time of a broadcast window, whether a start time of a scanning window needs to be readjusted.

If a determining result is yes, enter S1032 to adjust a start time of a next scanning window; or if a determining result is no, enter S1034 to perform no adjustment.

It may be understood that each node determines, in advance based on clock drift accuracy and a negotiated broadcast period, a clock drift threshold corresponding to the node, to determine whether the start time of the scanning window needs to be adjusted. It may be understood that a size of the broadcast window and the clock drift accuracy are important parameters that affect the clock drift threshold. The size of the broadcast window affects a tolerance of clock drift. When the broadcast window is large, a large deviation amount of staggering the scanning windows of the nodes is tolerated. In this case, the clock drift threshold may be set to a larger value based on clock drift accuracy evaluated by the nodes. If the broadcast window is small, the clock drift threshold may be set to a smaller value based on clock drift accuracy evaluated by the node. For example, the mobile phone 101 determines the clock drift threshold as 10 ms, and another electronic device also determines the corresponding clock drift threshold. Details are not described herein.

In some implementations, each node may determine, by determining whether a received heartbeat message corresponding to a start time of a broadcast window is from a standard node and whether a first time interval obtained based on the heartbeat message is greater than or equal to a clock drift threshold corresponding to the node, whether a start time of a scanning window needs to be adjusted, where the first time interval is a time interval between an actual time (that is, a first receiving time) at which the heartbeat message is received and an estimated time (that is, a second receiving time) at which the heartbeat message is received.

When the received heartbeat message is from the standard node, and a current time interval is greater than or equal to the clock drift threshold corresponding to the standard node, enter S1032, and adjust the start time of the next scanning window. Otherwise, enter S1034 to perform no adjustment.

It may be understood that the heartbeat message carries an agreed serial number of the heartbeat message broadcast by the broadcaster. For example, the heartbeat message carries information indicating that the heartbeat message is the 1^{st} heartbeat message in the first broadcast period of the node A. In addition, when negotiating in advance, each node may know a broadcast period of another node. In this case, each node may estimate, based on a received time of the 1^{st} heartbeat message that is broadcast by the another node in a broadcast period and the broadcast period of the node, a time of receiving the 1^{st} heartbeat message of a next broadcast period of the node.

Therefore, when a node receives the 1^{st} heartbeat message that is sent by a standard node and that is in a broadcast period, a first time interval obtained by the node varies significantly. In this case, it is determined to enter S1032 to adjust the start time of the next scanning window of the node. Otherwise, enter S1034.

For example, a system time at which the smart light 102 receives the heartbeat message from the mobile phone 101 is 12:00:00.030, and it is determined that the other party is a standard node. The smart light 102 estimates that a time for receiving is 12:00:00.041, so as to calculate that the first time interval is 11 ms, and a clock drift threshold of the smart light 102 is 10 ms. It is determined that the smart light 102 or the other party generates a large drift. In this case, the smart light 102 adjusts a scanning window of the smart light 102 to align with the scanning window of the standard node.

It may be understood that the first time interval is compared with the clock drift threshold of the smart light 102, and adjustment is performed when the clock drift threshold is reached, which helps maintain system stability.

S1032: Adjust a start time of a next scanning window and a start time of a next broadcast window.

In some embodiments, each node may, based on the first time interval calculated by the node, extend or shorten the start time of the next scanning window and the start time of the next broadcast window by the first time interval relative to the original start times. For example, the smart light 102 determines that the first receiving time is 11 ms earlier than the second receiving time, and the smart light 102 advances a start time of a next broadcast window by 11 ms. For another example, the smart light 102 determines that the first receiving time is 11 ms later than the second receiving time, and the smart light 102 delays the start time of the next broadcast window by 11 ms.

S1033: Each node readjusts, after periodically compensating for a clock of the node based on the standard node, a start time of a next broadcast window and a start time of a scanning window based on clock compensation adjusted by the standard node.

In some embodiments, the standard node periodically adjusts a time of the standard node based on a clock drift threshold of the standard node, for example, shortening or extending start times of both a scanning window and a broadcast window of the standard node, and notifies other nodes that the same adjustment needs to be performed, for example, notifying other nodes to shorten or extend start times of both a scanning window and a broadcast window of the other nodes.

For example, the mobile phone 101 is a standard node. After half a day, the mobile phone 101 increases the scanning window and the broadcast window by 10 ms. In this case, the mobile phone 101 notifies other nodes, and the other nodes also increase the scanning windows and the broadcast windows by 10 ms.

S1034: Each node performs no adjustment.

It may be understood that if the current node finds that the received heartbeat message is not broadcast by the standard node, adjustment does not need to be considered. If the received heartbeat message is broadcast by the standard node, but the first time interval does not reach the clock drift threshold, adjustment does not need to be considered.

It may be understood that an execution sequence of step S1031 to step S1034 is merely an example. In some other embodiments, another execution sequence may be used, or some steps may be split or combined. This is not limited herein. It may be understood that, dynamic adjustment in steps S1031 to S1034 is to be performed by nodes other than the standard node.

In some other embodiments, a node that is the first in a broadcast sequence may periodically send a scan adjustment message at an adjustment period, and the adjustment period is greater than a scanning interval of all nodes.

It may be understood that an execution sequence of step S101 to step S103 is merely an example. In some other embodiments, another execution sequence may be used, or some steps may be split or combined. This is not limited herein.

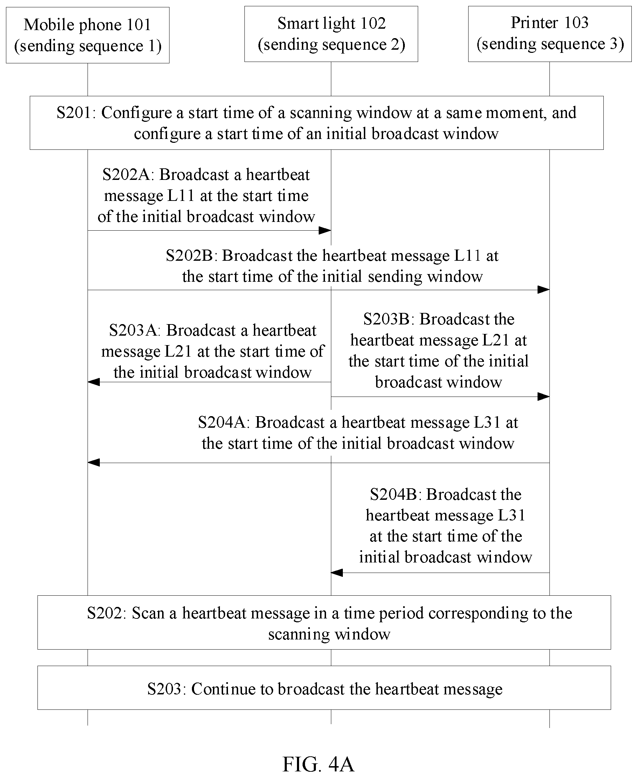

FIG. 4A is a diagram of an interaction based on a communication method for adjusting a packet scanning window according to some embodiments of this application. It may be understood that FIG. 4A specifically describes a processing process of each node in a time period corresponding to the first initial scanning window, and each electronic device needs to broadcast and receive a heartbeat message.

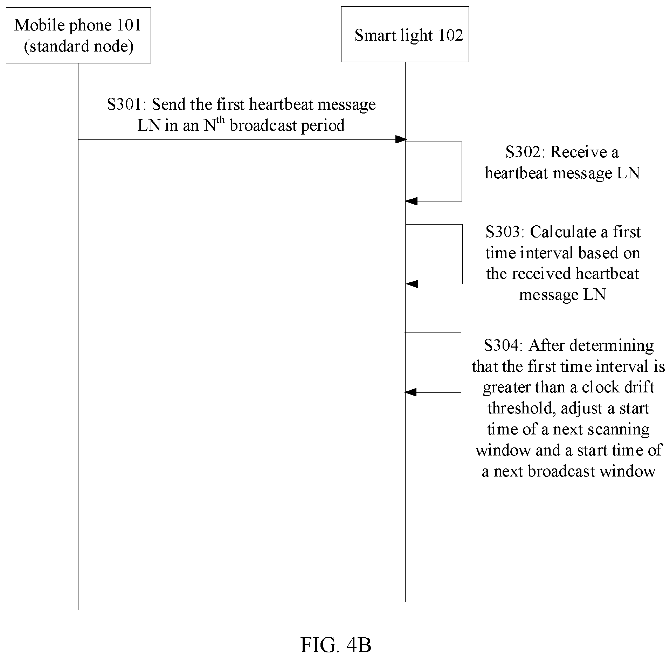

For ease of description, the following uses three specific nodes that respectively correspond to a mobile phone 101, a smart light 102, and a printer 103 as examples for description. In this embodiment of this application, specific steps in the diagram of an interaction process shown in FIG. 4 may be performed by an electronic device. In some other embodiments, the steps in the interaction process shown in FIG. 4 may also be performed by a structure such as a processor or a sensor hub of a corresponding electronic device. However, an execution body of the method procedure is not limited in this application.

S201: The mobile phone 101, the smart light 102, and the printer 103 configure scanning windows at a same moment, and respectively configure start times of initial broadcast windows.

It may be understood that, for a specific process in which the mobile phone 101, the smart light 102, and the printer 103 configure the scanning window at the same moment, and respectively configure the start times of the initial broadcast windows, refer to detailed descriptions in FIG. S101 and FIG. S102. Details are not described herein.

It may be understood that there is a broadcast sequence among the mobile phone 101, the smart light 102, and the printer 103. For example, the mobile phone 101, the smart light 102, and the printer 103 respectively correspond to a broadcast sequence 1, a broadcast sequence 2, and a broadcast sequence 3. The following steps S202A to S204B are a process in which the mobile phone 101, the smart light 102, and the printer 103 respectively broadcast heartbeat messages to all other devices based on the start times of the initial broadcast windows of the mobile phone 101, the smart light 102, and the printer 103 in the broadcast sequence.

S202A: The mobile phone 101 broadcasts a heartbeat message L11 to the smart light 102 at a start time of an initial broadcast window.

S202B: The mobile phone 101 broadcasts the heartbeat message L11 to the printer 103 at the start time of the initial broadcast window.

It may be understood that S202A and S202B are a same step for the mobile phone 101, and the mobile phone 101 uses a flooding broadcast manner. In this case, the mobile phone 101 broadcasts the heartbeat message L11 to the smart light 102 and the printer 103 at the start time of the initial broadcast window. For specific descriptions of broadcasting the heartbeat message, refer to step S102 in FIG. 3A. Details are not described herein.

S203A: The smart light 102 broadcasts a heartbeat message L21 to the mobile phone 101 at a start time of an initial broadcast window.

S203B: The smart light 102 broadcasts the heartbeat message L21 to the printer 103 at the start time of the initial broadcast window.

It may be understood that S203A and S203B are a same step for the smart light 102, and are essentially the same as that for the mobile phone 101 to broadcast the heartbeat message L21. Details are not described herein.

S204A: The printer 103 broadcasts a heartbeat message L31 to the mobile phone 101 at a start time of an initial broadcast window.

S204B: The printer 103 broadcasts the heartbeat message L32 to the smart light 102 at the start time of the initial broadcast window.

It may be understood that S203A and S203B are a same step for the smart light 102, and are essentially the same as that for the mobile phone 101 to broadcast the heartbeat message L21. Details are not described herein.

S202: The mobile phone 101, the smart light 102, and the printer 103 receive a heartbeat message in a time period corresponding to a corresponding scanning window.

It may be understood that, for steps S202A and S202B, if the mobile phone 101 broadcasts a packet in the time period corresponding to the scanning window, the smart light 102 and the printer 103 can successfully receive the heartbeat message L11. Similarly, for the heartbeat message L21 broadcast by the smart light 102 and the heartbeat message L31 broadcast by the printer 103, the same applies.

S203: The mobile phone 101, the smart light 102, and the printer 103 continue to broadcast heartbeat messages.

It may be understood that after the mobile phone 101, the smart light 102, and the printer 103 broadcast the 1^{st} heartbeat message, the mobile phone 101, the smart light 102, and the printer 103 continue to broadcast the heartbeat message according to a broadcast rule subsequently. For details, refer to step S102 in FIG. 3A. Details are not described herein. It may be understood that an execution sequence of step S201 to step S203 is merely an example. In some other embodiments, another execution sequence may be used, or some steps may be split or combined. This is not limited herein.

FIG. 4B is a diagram of an interaction based on another communication method for adjusting a packet scanning window according to some embodiments of this application. In addition, FIG. 4A specifically describes a processing process in which a node performs adjustment to compensate for clock drift after receiving the first heartbeat message broadcast by another node in a broadcast period. For ease of description, only an example in which a smart light 102 receives the first protection packet in an N^{th} broadcast period of a mobile phone 101 and the mobile phone 101 is a standard node is used for description. When each electronic device in the diagram of an interaction process performs a specific step, an execution body may be an electronic device, or may be a processor or a sensor hub of the electronic device. However, an execution body of the method procedure is not limited in this application.

S301: The mobile phone 101 broadcasts the first heartbeat message LN of an N^{th} broadcast period of the smart light 102.

S302: The smart light 102 receives the heartbeat message LN.

S303: The smart light 102 calculates a first time interval based on a broadcast time in the heartbeat message LN and a receiving time of the smart light 102 during packet scanning.

S304: After determining that the first time interval is greater than a clock drift threshold, the smart light 102 adjusts a start time of a next scanning window and a start time of a next broadcast window.

For specific descriptions of steps S303 and S304, refer to steps S1031 and S1032. Details are not described herein.

It may be understood that an execution sequence of step S301 to step S304 is merely an example. In some other embodiments, another execution sequence may be used, or some steps may be split or combined. This is not limited herein.

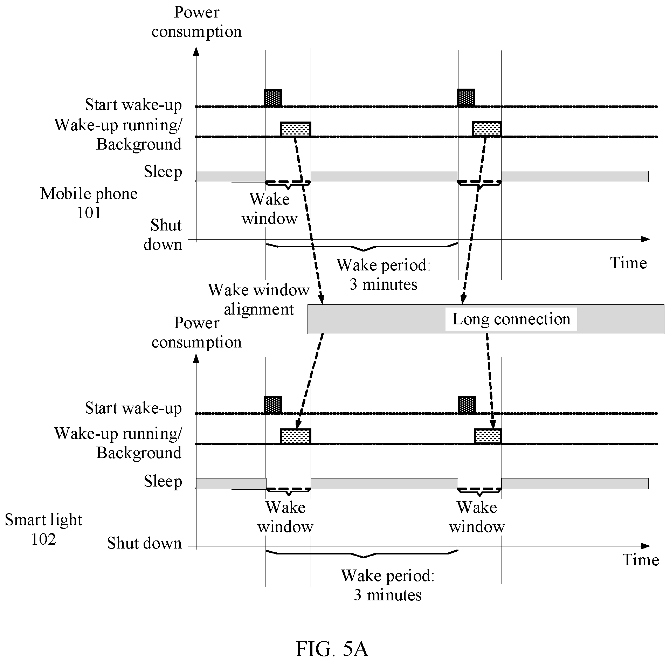

In some embodiments, each node needs to control, by using a CPU, a Bluetooth chip to broadcast a packet. After the node is in sleep, the node needs to periodically wake up the CPU to perform packet broadcast work, that is, the CPU can perform a heartbeat message operation only after being woken up. It may be understood that the nodes may align wake windows, to improve service experience. For example, FIG. 5A is a diagram of aligning wake windows of a mobile phone 101 and a smart light 102 when wake windows and wake periods are equal. The vertical axes represent power consumption, and the horizontal axes represent time. In the vertical axes, "start wake-up" indicates that the CPU starts to wake up, and in this case, power consumption is the highest. "wake-up running/background" indicates power consumption when the CPU runs after being woken up, and the wake-up window in the horizontal axes corresponds to a "start wake-up" and a "wake-up running/background" part in the vertical axes. "Sleep" indicates that the CPU goes to sleep. A wake period "3 minutes" indicates that the CPU is woken up every 3 minutes. Wake duration is a time width of a wake window.

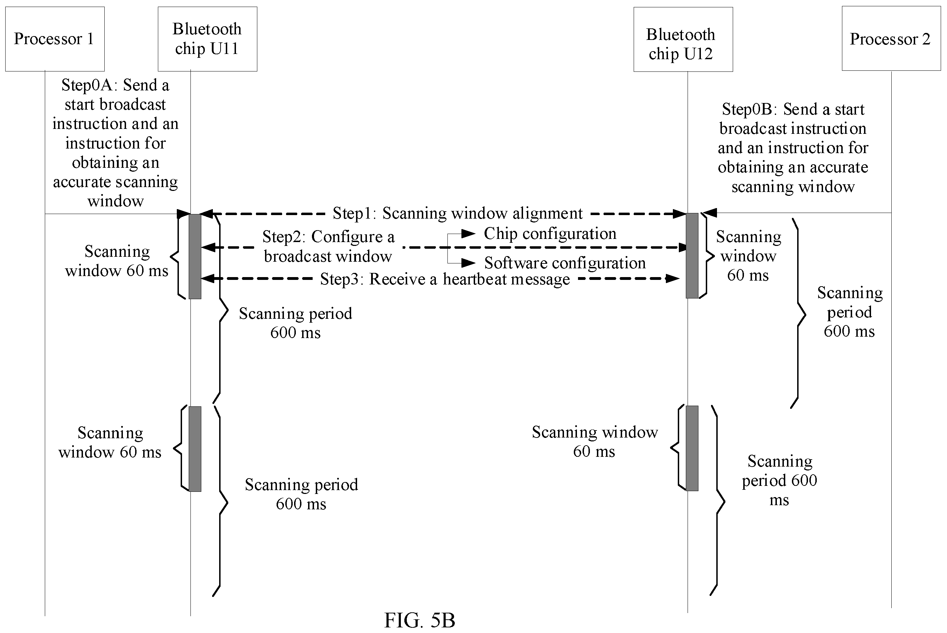

FIG. 5B is a diagram of an operation of controlling a Bluetooth chip based on a CPU in an initial one scanning period according to an embodiment of this application. In FIG. 5B, interaction between two electronic devices is used as an example for brief description. It is assumed that an electronic device A1, for example, a mobile phone 101, includes a processor 1 and a Bluetooth chip U11, and an electronic device A2, for example, a smart light 102, includes a processor 2 and a Bluetooth chip U12.

Step 0A: The processor 1 sends, to the Bluetooth chip U11, a start broadcast instruction and an instruction for obtaining an accurate scanning window. Specifically, the processor 1 sends the start broadcast instruction to the Bluetooth chip U11, and may indicate the Bluetooth chip U11 to start to send a broadcast signal. After the processor 1 sends, to the Bluetooth chip U11, the instruction for obtaining the accurate scanning window, the processor 1 may obtain scanning window information from the Bluetooth chip U11, so as to optimize Bluetooth communication performance based on the scanning window information.

Step 0B: The processor 2 sends, to the Bluetooth chip U12, a start broadcast instruction and an instruction for obtaining an accurate scanning window. It may be understood that this step is essentially the same as the step 0A, and details are not described herein.

It may be understood that the step 0A and the step 0B may be performed synchronously or asynchronously, and details are not described herein.

After the step 0A or the step 0B, the processor 1 and the processor 2 may continue to perform the following steps Step 1 to Step 3.

Step 1: The processor 1 and the processor 2 respectively control the Bluetooth chip U11 and the Bluetooth chip U12 to perform scanning window alignment. Specifically, the processor 1 and the processor 2 respectively control the Bluetooth chip U11 and the Bluetooth chip U12, and configure start times of initial scanning windows at a same moment. For a specific description, refer to S101 and S102 in FIG. 3A. Details are not described herein.

Step 2: The processor 1 and the processor 2 respectively control the Bluetooth chip U11 and the Bluetooth chip U12 to configure broadcast windows. Specifically, the processor 1 and the processor 2 respectively control the Bluetooth chip U11 and the Bluetooth chip U12 to configure start times of the broadcast windows based on a broadcast sequence and a discrete time, and broadcast heartbeat messages. It may be understood that, when the start times of the broadcast windows are configured, code needs to be written in software to configure the broadcast windows, and the Bluetooth chip also needs to be enabled to configure the broadcast windows. For a specific description, refer to S102 in FIG. 3A. Details are not described herein.

Step 3: The processor 1 and the processor 2 respectively control the Bluetooth chip U11 and the Bluetooth chip U12 to receive the heartbeat messages. Specifically, the processor 1 and the processor 2 respectively control the Bluetooth chip U11 and the Bluetooth chip U12 to receive the heartbeat message in a time period corresponding to the scanning windows.

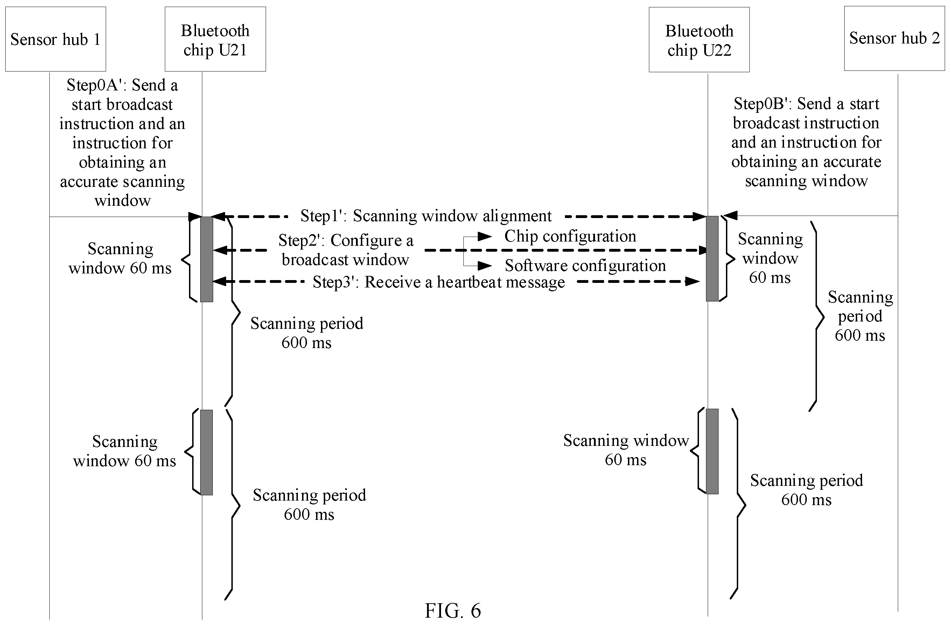

FIG. 6 is a diagram of an operation of controlling a Bluetooth chip based on a sensor hub in an initial one scanning period according to an embodiment of this application. In FIG. 6, interaction between two electronic devices is used as an example for brief description. It is assumed that an electronic device B1 includes a sensor hub 1 and a Bluetooth chip U21, and an electronic device B2 includes a sensor hub 2 and a Bluetooth chip U22.

Step 0A': The sensor hub 1 sends, to the Bluetooth chip U21, a start broadcast instruction and an instruction for obtaining an accurate scanning window.

Step 0B': The sensor hub 2 sends, to the Bluetooth chip U22, a start broadcast instruction and an instruction for obtaining an accurate scanning window.

Step 1': The sensor hub 1 and the sensor hub 2 respectively control the Bluetooth chip U21 and the Bluetooth chip U22 to perform scanning window alignment.

Step 2': The sensor hub 1 and the sensor hub 2 respectively control the Bluetooth chip U21 and the Bluetooth chip U22 to configure broadcast windows.

Step 3': The sensor hub 1 and the sensor hub 2 respectively control the Bluetooth chip U21 and the Bluetooth chip U22 to receive heartbeat messages.

It may be understood that the foregoing process is essentially the same as the process shown in FIG. 5, and details are not described herein.

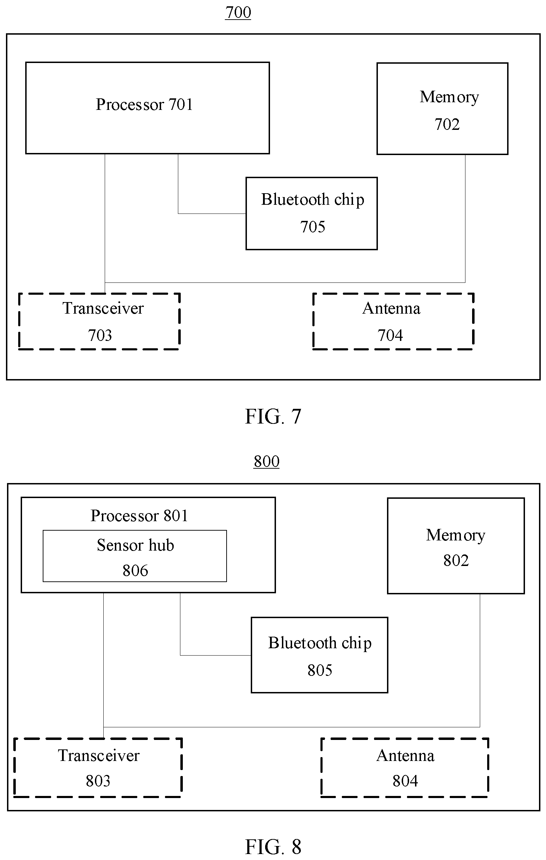

FIG. 7 is a diagram of a structure of an electronic device 700 according to an embodiment of this application. It may be understood that the electronic device 700 may be any electronic device in the foregoing Bluetooth mesh network. Details are not described herein.

As shown in FIG. 7, the electronic device 700 may include one or more processors 701, one or more memories 702, a transceiver 703, an antenna 704, a Bluetooth chip 705, and the like.

The processor 701 may also be referred to as a processing unit, and may implement a specific control function. The processor 701 may be a general-purpose processor, a dedicated processor, or the like. For example, the processor 701 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU or a CU, and the Bluetooth chip 705), execute a software program, and process data of the software program. In some embodiments of this application, the processor 701 may control the Bluetooth chip 705 to perform the communication method for adjusting a packet scanning window in the embodiments of this application, for example, perform the communication method for adjusting a packet scanning window in FIG. 3A, FIG. 4A, FIG. 4B, and FIG. 5B.

In an optional design, the processor 701 may also store instructions and/or data, and the instructions and/or the data may be run by the processor, so that the electronic device 700 performs the method described in the foregoing method embodiment, for example, performs the communication method for adjusting a packet scanning window in FIG. 3A, FIG. 4A, FIG. 4B, and FIG. 5B.

The processor 701 may further include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

The memory 702 may store instructions/data, and the instructions may be run on the processor, so that the electronic device 700 performs the method described in the foregoing method embodiment. Optionally, the memory may further store data.

The transceiver 703 may be referred to as a transceiver unit, a transceiver machine, a transceiver circuit, a transceiver apparatus, an interface, an interface circuit, a transceiver module, or the like, and is configured to implement a transceiver function.

FIG. 8 is a diagram of a structure of another electronic device 800 according to an embodiment of this application. It may be understood that the electronic device 700 may be any electronic device in the foregoing Bluetooth mesh network. Details are not described herein.

As shown in FIG. 8, the electronic device 800 may include one or more processors 801, one or more memories 802, a transceiver 803, an antenna 804, a Bluetooth chip 805, a sensor hub 806, and the like.

The processor 801 may also be referred to as a processing unit, and may implement a specific control function. The processor 801 may be a general-purpose processor, a dedicated processor, or the like. For example, the processor 801 may be a baseband processor or a central processing unit. The baseband processor may be configured to process a communication protocol and communication data. The central processing unit may be configured to: control a communication apparatus (for example, a base station, a baseband chip, a terminal, and a terminal chip), execute a software program, and process data of the software program.

In some embodiments of this application, a sensor hub 806 is further disposed on the processor 801. The sensor hub 806 is a device or system for managing and processing a plurality of sensor data. It can integrate various types of sensors and centrally process and analyze output data of the sensors. The sensor hub 806 may also store instructions and/or data, and the instructions and/or the data may be run by the sensor hub 806, so that the electronic device 800 performs the method described in the foregoing method embodiment, for example, performs the communication method for adjusting a packet scanning window shown in FIG. 3A, FIG. 4A, FIG. 4B, and FIG. 6.

The memory 802 may store instructions/data, and the instructions may be run on the processor, so that the electronic device 800 performs the method described in the foregoing method embodiment. Optionally, the memory may further store data.

The transceiver 803 may be referred to as a transceiver unit, a transceiver machine, a transceiver circuit, a transceiver apparatus, an interface, an interface circuit, a transceiver module, or the like, and is configured to implement a transceiver function.

Embodiments disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism for storing or transmitting information in a machine (for example, a computer)-readable form, including but not limited to a floppy disk, an optical disc, a compact disc, a magnetic disc, a read-only memory (read-only memory, ROM), a random access memory (random access memory, RAM), an erasable programmable read-only memory, an electrically erasable programmable read-only memory, a magnetic card or an optical card, a flash memory, or a tangible machine-readable memory that uses electrical, optical, acoustic, or other forms of propagated signals (for example, carrier waves, infrared signals, digital signals) to transmit information via the Internet. Therefore, the machine-readable medium includes any type of machine-readable medium suitable for storing or transmitting an electronic instruction or information in the machine (for example, a computer)-readable form.

In the accompanying drawings, some structural or method features may be shown in a particular arrangement and/or order. However, it should be understood that such a particular arrangement and/or sequence may not be required. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that: In the examples and specification of this patent, relational terms such as first and second are merely used to distinguish one entity or operation from another, and do not necessarily require or imply any such actual relationship or order between these entities or operations. Moreover, the term "include" or any other variant thereof is intended to cover a nonexclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element. Although this application has been illustrated and described with reference to some preferred embodiments of this application, a person of ordinary skill in the art should understand that various changes may be made to this application in terms of form and details without departing from the scope of this application.

## Claims

1. A communication method for adjusting a packet scanning window, comprising:
broadcasting, by a first Bluetooth device in a Bluetooth mesh network, a first scan adjustment message, wherein the first scan adjustment message indicates a second Bluetooth device and a third Bluetooth device in the Bluetooth mesh network to adjust a start time of a packet scanning window to a first moment, a start time of the packet scanning window of the second Bluetooth device before adjustment is a second moment, a start time of the packet scanning window of the third Bluetooth device before adjustment is a third moment, and the first moment, the second moment, and the third moment are all different time points;
adjusting, by the first Bluetooth device, the start time of the packet scanning window to the first moment; and
scanning, by the first Bluetooth device, a plurality of heartbeat messages in at least one packet scanning window obtained after the start time is adjusted, wherein the plurality of heartbeat messages comprise a first heartbeat message broadcast by the second Bluetooth device and a second heartbeat message broadcast by the third Bluetooth device.

2. The method according to claim 1, further comprising:
determining, based on clock drift accuracy of each Bluetooth device in the Bluetooth mesh network, that the first scan adjustment message is to be broadcast by the first Bluetooth device, wherein the clock drift accuracy of the first Bluetooth device meets a first accuracy condition.

3. The method according to claim 1, wherein scanning periods of the first Bluetooth device, the second Bluetooth device, and the third Bluetooth device are the same or in a multiple relationship, and the scanning periods comprise the packet scanning window and a scanning sleep period.

4. The method according to claim 3, wherein the first Bluetooth device periodically sends a scan adjustment message at an adjustment period, the adjustment period is greater than or equal to a maximum scanning period, and the maximum scanning period is a maximum scanning period of scanning periods of the first Bluetooth device and a Bluetooth device other than the first Bluetooth device in the Bluetooth mesh network.

5. A communication method for adjusting a packet scanning window, comprising:
receiving, by a second Bluetooth device in a Bluetooth mesh network, a first scan adjustment message sent by a first Bluetooth device in the Bluetooth mesh network, and adjusting a start time corresponding to a packet scanning window to a first moment, wherein a start time of the packet scanning window of the second Bluetooth device before adjustment is a second moment, and the first moment and the second moment are different time points; and
scanning, by the second Bluetooth device, a plurality of heartbeat messages in at least one packet scanning window obtained after the start time is adjusted, wherein the plurality of heartbeat messages comprise a third heartbeat message broadcast by the first Bluetooth device and a second heartbeat message broadcast by a third Bluetooth device.

6. The method according to claim 5, wherein the third heartbeat message is a heartbeat message broadcast by the first Bluetooth device in a P1^{th} broadcast period, and the second Bluetooth device scans the third heartbeat information in an S2^{th} scanning period, wherein the scanning period comprises the packet scanning window and a scanning sleep period.

7. The method according to claim 6, further comprising:
scanning, by the second Bluetooth device at a fourth moment, a fourth heartbeat message broadcast by the first Bluetooth device in a (P1+n)^{th} broadcast period;
determining, by the second Bluetooth device based on a first time interval, that a packet scanning window of the second Bluetooth device in an (S2+j)^{th} scanning period meets a first window adjustment condition, wherein the first time interval is:
a time interval between a first receiving time tm at which the second Bluetooth device scans the fourth heartbeat message and an estimated second receiving time tn at which the fourth heartbeat message is received; and
adjusting a start time of the packet scanning window in the (S2+j+1)^{th} scanning period.

8. The method according to claim 7, further comprising: the first window adjustment condition comprises:
the first time interval is greater than a time threshold.

9. The method according to claim 8, wherein the adjusting the start time of the packet scanning window of the (S2+j+1)^{th} scanning period comprises:
when the first receiving time tm is earlier than the second receiving time tn, advancing the start time of the packet scanning window of the (S2+j+1)^{th} scanning period by the first time interval; and
when the first receiving time tm is later than the second receiving time tn, delaying the start time of the packet scanning window of the (S2+j+1)^{th} scanning period by the first time interval.

10. The method according to claim 7, wherein the fourth heartbeat message is a heartbeat message that is broadcast for the first time among heartbeat messages that are broadcast by the first Bluetooth device for a plurality of times in the (P1+n)^{th} broadcast period.

11. A Bluetooth device, comprising a memory and a processor, wherein the memory is configured to store program instructions, and the processor is configured to read the program instructions, so that the Bluetooth device is enabled to perform the communication method for adjusting a packet scanning window according to any one of claims 1 to 10.

12. A computer program product, wherein the computer program product comprises instructions, and when the instructions are executed, a computer is enabled to perform the communication method for adjusting a packet scanning window according to any one of claims 1 to 10.

13. A readable storage medium, wherein the readable medium stores instructions, and when the instructions are executed on an electronic device, the electronic device is enabled to perform the communication method for adjusting a packet scanning window according to any one of claims 1 to 10.
